# EUROPEAN PATENT APPLICATION

(11) **EP 4 354 690 A1**
(43) Date of publication of application: **17.04.2024**
(21) Application number: 22820079.6
(22) Date of filing: 30.05.2022
(51) Int. Cl.: H02J 7/00, H02J 7/02, H02J 3/28, H02J 3/38, H01M 10/052, H01M 10/0566, H01M 10/18, H01M 10/44, H01M 10/48

(54) **ELECTRICITY STORAGE SYSTEM**

(30) Priority: 10.06.2021 JP 2021097069; 10.06.2021 JP 2021097070; 10.06.2021 JP 2021097071
(71) Applicant: FURUKAWA ELECTRIC CO., LTD., Tokyo 100-8322 (JP); The Furukawa Battery Co., Ltd., Yokohama-shi, Kanagawa-ken 240-0006 (JP)
(72) Inventor: IWANE Noriyasu, Tokyo 100-8322 (JP); NAKAMURA Hideto, Tokyo 100-8322 (JP); ARAGAKI Masanobu, Tokyo 100-8322 (JP)
(74) Representative: Grünecker Patent- und Rechtsanwälte PartG mbB
(86) International application number: PCT/JP2022/021964
(87) International publication number: WO 2022/259897

(57) **Abstract**

There is provided a power storage system capable of efficiently performing charging with respect to a power supply in which a cycle of supplied power fluctuates. A power storage system (1) is connected to a power supply in which a cycle of supplied power fluctuates. The power storage system (1) includes a first storage battery (21) and a second storage battery (23) having an internal resistance lower than an internal resistance of the first storage battery (21) at a same voltage and a same capacity Wh, the first storage battery (21) and the second storage battery (23) being connected in parallel.

## Description

### Technical Field

The present invention relates to a hybrid power storage system including a plurality of battery units having different designs.

### Background Art

As a battery back-up system (power storage system) for power storage in a power network including a power source and a load, PTL 1 discloses a hybrid battery system including: a battery system that includes a first rechargeable battery unit having a first battery chemistry and a second rechargeable battery unit having a second battery chemistry different from the first battery chemistry; a control system for selectively coupling the first and second battery units to the power network; and a power supply voltage sensor for detecting an operating voltage of the power source, the control system having logic configured to switch the control system between charging and discharging of the battery system based on the operating voltage being in a charging range or a discharging range, respectively.

In the hybrid power storage system of PTL 1, as the power source, a renewable power supply, for example, wind power generation, solar panel power generation, or the like, or a wide area AC grid supplied by a power plant or a large scale renewable energy source is used. Then, with a stationary hybrid battery back-up system including a first battery unit having a high charge/discharge efficiency and a second battery unit having a lower charge/discharge efficiency than the first battery unit, efficiency can be maximized for a power outage with an expected frequency and duration.

The wind power generation disclosed as the renewable power supply has a characteristic that power to be generated fluctuates in a short cycle due to fluctuations of wind power, and the solar panel power generation has a characteristic that power to be supplied fluctuates in a longer cycle than that of the wind power generation since power is generated in daytime when the sun is shining and power is not generated at night. In addition, in a case where a power rate in a midnight time zone is set to be inexpensive in the wide area AC grid or the like in which the power supply is supplied by the power plant or the large scale renewable energy source, a user having the power storage system stores power in the midnight time zone since less power is consumed in the midnight time zone, and discharges the power stored in the midnight time zone to a load side in a day time zone in which the power rate is expensive to refrain a purchase of power in an expensive time zone in some cases.

In addition, PTL 1 discloses a lithium ion battery as the first battery unit having a high charge/discharge efficiency. However, in recent years, a bipolar lead-acid battery has attracted attention as a battery having a high charge/discharge efficiency at low cost.

### Citation List

### Patent Literature

PTL 1: JP 2019-530405 A

### Summary of Invention

### Technical Problem

The power storage system needs to efficiently charge power from the wind power generation in which power fluctuates in a short cycle, the solar panel power generation in which power fluctuates in a long cycle, and the like. In addition, it is also necessary to efficiently perform charging and discharging in a long charging and discharging cycle in which charging and discharging for several hours are repeated in a one-day cycle, such as charging power in the midnight time zone and supplying power stored in the midnight time zone to the load in the day time zone. Furthermore, the power storage system is required to be low in cost.

However, it is unclear whether the hybrid power storage system disclosed in PTL 1 can efficiently charge the power that fluctuates in a short cycle as in the wind power generation and the power that fluctuates in a long cycle as in the solar panel power generation. In addition, the lithium ion battery as the first battery unit exemplified in PTL 1 has a high charge/discharge efficiency but is high in cost. On the other hand, the bipolar lead-acid battery has a high charge/discharge efficiency at low cost, but is inferior to the lithium ion battery in terms of a high output characteristic, and thus, has a problem that a charge efficiency is inferior to that of the lithium ion battery with respect to a power supply in which power fluctuates in a short cycle such as the wind power generation.

In view of the above problem, the present invention provides a power storage system that is low in cost and is capable of efficiently performing charging with respect to a power supply in which a cycle of supplied power fluctuates as in a case of being connected to a power supply in which power fluctuates in a short cycle such as wind power generation and a power supply which power fluctuates in a long cycle such as solar panel power generation, or capable of efficiently performing charging and discharging with respect to a long charging and discharging cycle in which charging and discharging for several hours are repeated in a one-day cycle.

### Solution to Problem

One aspect of the present invention is a power storage system connected to a power supply in which a cycle of supplied power fluctuates, the power storage system including: a first storage battery; and a second storage battery having an internal resistance lower than an internal resistance of the first storage battery at a same voltage and a same capacity Wh, the first storage battery and the second storage battery being electrically connected in parallel.

### Advantageous Effects of Invention

In view of the above problem, the present invention provides the power storage system capable of efficiently performing charging with respect to the power supply in which the cycle of the supplied power fluctuates since the internal resistance of the second storage battery is set to be lower than the internal resistance of the first storage battery, so that a current flowing through the second storage battery is larger than a current flowing through the first storage battery, the first storage battery can cope with a power supply that fluctuates in a long cycle, and the second storage battery can cope with a power supply that fluctuates in a short cycle and cannot be coped with by the first storage battery.

### Brief Description of Drawings

FIG. 1 is a configuration diagram of an electric power grid system including a power storage system according to a first embodiment;
FIG. 2 is a view illustrating output characteristics of a power supply;
FIG. 3 is a block diagram of the power storage system according to the first embodiment;
FIG. 4 is a schematic view of a bipolar storage battery used in the power storage system according to the first embodiment;
FIG. 5 is a schematic view of a lead-acid battery used in the power storage system according to the first embodiment;
FIG. 6 is a view illustrating an operation of the power storage system according to the first embodiment;
FIG. 7 is a block diagram illustrating a mechanism of the power storage system according to the present embodiment;
FIG. 8 is a block diagram of a power storage system according to a second embodiment;
FIG. 9 is a block diagram of a power storage system according to a third embodiment;
FIG. 10 is a block diagram illustrating a mechanism of the power storage system according to the third embodiment;
FIG. 11 is an explanatory view illustrating the mechanism of the power storage system according to the third embodiment;
FIG. 12 is a block diagram illustrating an overall configuration of a storage battery system according to a fourth embodiment; and
FIG. 13 is a block diagram illustrating an internal configuration of a storage battery according to the fourth embodiment.

### Description of Embodiments

Embodiments of the present invention will be described hereinafter with reference to the accompanying drawings. In the following description of the drawings, the same or similar portions are denoted by the same or similar reference signs. However, the drawings are schematic, and relationships between thicknesses and plane dimensions, thickness ratios among layers, and the like are different from actual ones. In addition, the embodiments described below illustrate apparatuses and methods for embodying the technical idea of the present invention, and the technical idea of the present invention does not specify materials, shapes structures, arrangements, and the like of constituent parts as follows. Various modifications can be made to the technical idea of the present invention within the technical scope defined by the claims described in the claims.

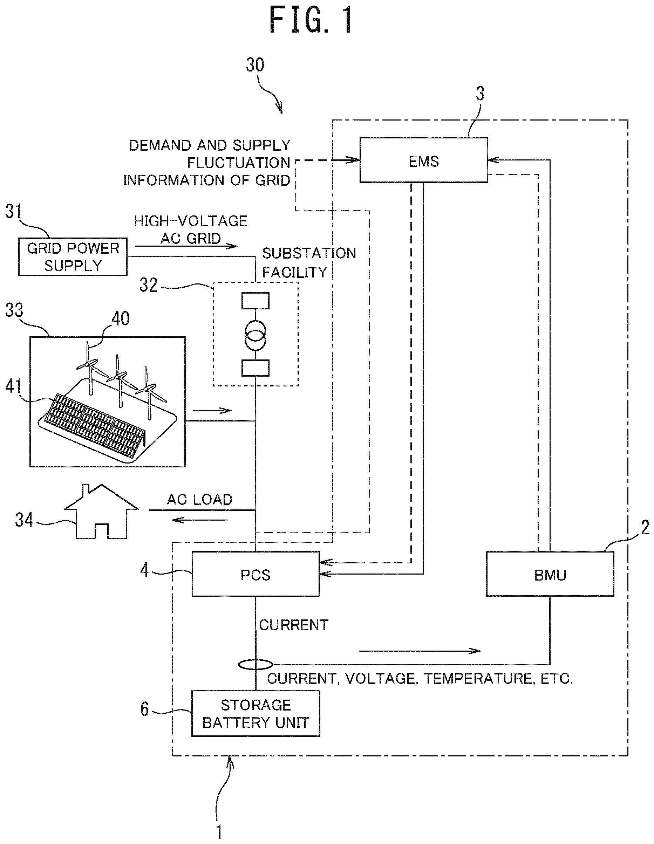

FIG. 1 is a system configuration diagram of an electric power grid system 30 including a power storage system 1 according to a first embodiment of the present invention. The power storage system 1 is connected to a power supply in which a cycle of supplied power fluctuates. Specifically, for example, the system is provided in general housing, an apartment building, a factory, and the like, stores power generated using renewable energy such as sunlight or wind power and power of a commercial power supply at night, and supplies the stored power to a load as necessary. For example, in a case of commercial power, it is possible to suppress a power purchase amount (electricity usage amount) of power (peak power) in a time zone in which power demand is the highest in a day (a peak cut) and store power generated using the renewable energy in preparation for a case where power is insufficient due to the peak cut and make up for the insufficiency using the stored power. In addition, it is possible to suppress a power purchase amount (a peak shift) by storing power in a night time zone when the power demand is low and using the power stored in the night time zone during a day time zone when the power demand is high.

In addition, since the renewable energy greatly fluctuates depending on the weather or the like, the power generated by the renewable energy is also unstable. In order to stably supply power, the power storage system 1 can also store generated power and output the generated power as necessary.

As illustrated in FIG. 1, the electric power grid system 30 includes a grid power supply 31 (commercial power supply) supplied from a commercial power grid; substation equipment 32 that converts power from the grid power supply 31; a distributed power supply 33 that is a power supply provided separately from the grid power supply 31 and uses renewable energy; a load 34 that receives power supply from the grid power supply 31 or the distributed power supply 33; and the power storage system 1 that stores power from the grid power supply 31 or the distributed power supply 33 and supplies power to the load 34.

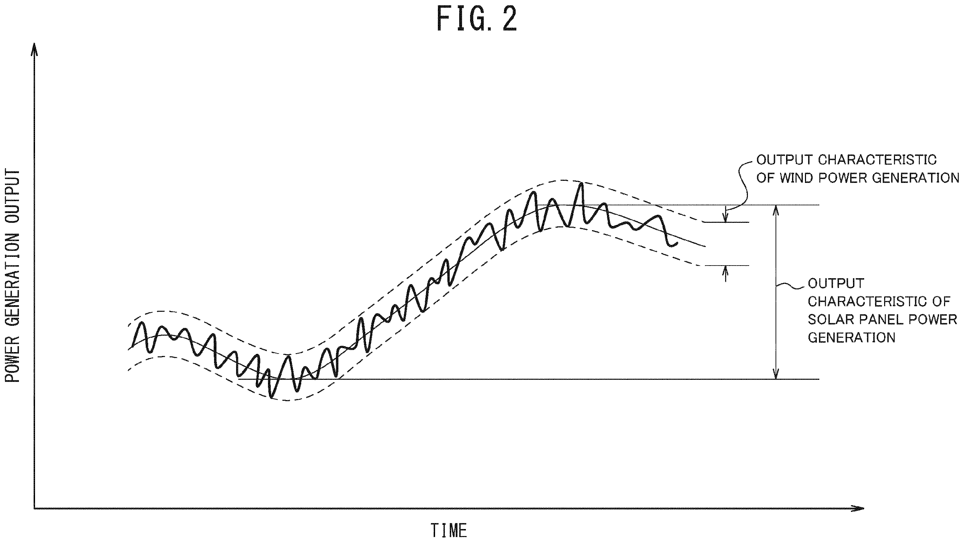

The distributed power supply 33 includes wind power generation 40 that converts wind power into electric energy as a first power generation apparatus of the present invention, and solar panel power generation 41 that converts sunlight into electric energy as a second power generation apparatus. FIG. 2 illustrates output characteristics of the distributed power supply 33. In FIG. 2, a wavy line fluctuating within a range between two upper and lower broken lines indicates the output characteristic in the case of the wind power generation 40, and a wavy line indicated by the two upper and lower broken lines indicates the output characteristic in the case of the solar panel power generation 41, and the output characteristics of the both are combined. Since the wind power generation 40 is power generation that converts wind power into electric energy, the wind power generation has a characteristic that the generated power fluctuates in a short cycle due to fluctuations of the wind power. The solar panel power generation 41 generates power in daytime when the sun is shining and does not generate power at night, and thus, has a characteristic that the generated power fluctuates in a longer cycle than that of the wind power generation 40.

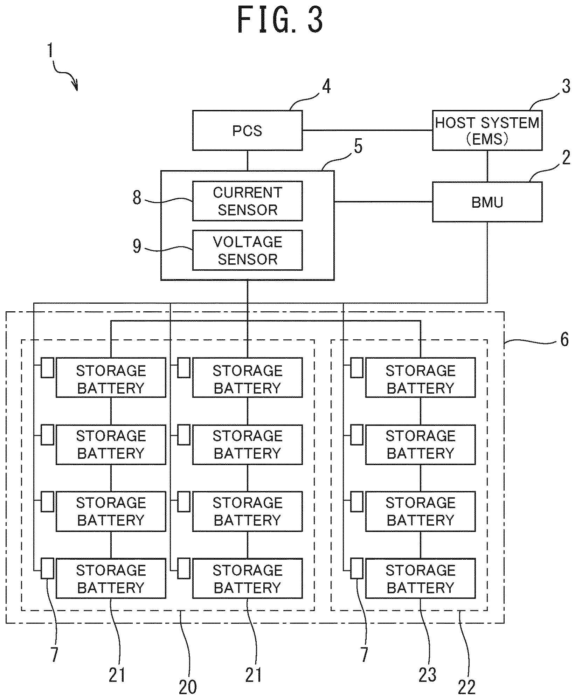

FIG. 3 is a block diagram illustrating the power storage system 1 according to the first embodiment of the present invention. As illustrated in FIG. 3, the power storage system 1 includes a storage battery monitoring apparatus (BMU) 2, a host system (EMS) 3, an AC-DC converter (PCS) 4, an assembled battery sensor 5, a storage battery unit 6, and a plurality of temperature sensors 7. The assembled battery sensor 5 includes a current sensor 8 and a voltage sensor 9.

The storage battery unit 6 includes a first storage battery group 20 and a second storage battery group 22, and the first storage battery group 20 and the second storage battery group 22 are electrically connected in parallel to the PCS 4. The first storage battery group 20 includes a plurality of first storage batteries 21.

In the present embodiment, a pair of four first storage batteries 21 connected in series is connected in parallel in the first storage battery group 20. The second storage battery group 22 includes a plurality of second storage batteries 23. In the present embodiment, four second storage batteries 23 are connected in series in the second storage battery group 22. When an internal resistance of the second storage battery 23 is R2 and an internal resistance of the first storage battery 21 is R1, the internal resistance R2 of the second storage battery 23 is set to be lower than the internal resistance R1 of the first storage battery 21 at a same voltage and a same capacity Wh in the present embodiment. Therefore, the second storage battery 23 has an output characteristic higher than that of the first storage battery 21 (has a high output characteristic). In the present embodiment, the first storage battery 21 is a bipolar lead-acid battery, and the second storage battery 23 is a general lead-acid battery to be described later. Note that the pair of four first storage batteries 21 connected in series is connected in parallel in the first storage battery group 20, and the four second storage batteries 23 are connected in series in the second storage battery group 22 in the present embodiment. However, the number of the first storage batteries 21 in the first storage battery group 20 and the number of the second storage batteries 23 in the second storage battery group 22 are not limited thereto, and for example, one first storage battery 21 and one second storage battery 23 may be connected in parallel.

The storage battery monitoring apparatus (BMU) 2 is a data processing apparatus including a monitoring function of monitoring states of the respective first storage batteries 21 and the respective second storage batteries 23 of the storage battery unit 6 based on measurement information from the current sensor 8, the voltage sensor 9, and the plurality of temperature sensors 7, and a charging and discharging control function of controlling charging and discharging of the storage battery unit 6. In addition, in a case where a consumer such as general household provided with the power storage system 1 desires to suppress the power purchase amount by performing the peak cut and peak shift of commercial power, the peak cut and peak shift can be set in the BMU 2. In such a case, the BMU 2 has a function of requesting the EMS 3 to stop using power from the grid power supply 31 in a predetermined time zone in the daytime (the peak cut) and to store power from the grid power supply 31 in a predetermined time zone at night.

The PCS 4 includes an inverter, and is a power conversion unit that is electrically connected between a power supply side of the grid power supply 31 and the distributed power supply 33 and a load side of the load 34, and a power storage side of the storage battery unit 6, and controls transmission and reception of power. The PCS 4 is controlled by the EMS 3, and performs charging and discharging of the storage battery unit 6. The PCS 4 converts DC power into AC power having a predetermined frequency when discharging power from the storage side of the storage battery unit 6 to the load 34, and converts AC power into DC power when charging the storage battery unit 6 with power from the power supply side of the grid power supply 31 and the distributed power supply 33.

The EMS 3 controls charging and discharging of the storage battery unit 6 by driving the PCS 4 in response to a request from the BMU 2, and further, for example, the EMS 3 instructs the PCS 4 to cause the storage battery unit 6 to perform a discharging operation in a case where power consumption of the load 34 exceeds power generated on the power supply side of the grid power supply 31 and the distributed power supply 33. In addition, in a case where the power consumption of the load 34 is less than the power generated on the power supply side of the grid power supply 31 and the distributed power supply 33, the EMS 3 instructs the PCS 4 to cause the storage battery unit 6 to perform a charging operation. That is, the EMS 3 superimposes charging and discharging requests from the BMU 2 and charging and discharging for balancing the consumed power and the generated power, and issues a final charging and discharging instruction to the PCS 4.

The assembled battery sensor 5 is a sensor that measures charging and discharging currents and a total voltage of the storage battery unit 6. In addition, the plurality of temperature sensors 7 are installed in the plurality of first storage batteries 21 and the plurality of second storage batteries 23, and measure temperatures of the first storage batteries 21 and the second storage batteries 23, respectively. Here, the temperature sensors 7 are not limited to such an example, and may be installed in, for example, a representative storage battery among the plurality of first storage batteries 21 and a representative storage battery among the plurality of second storage batteries 23, respectively, or may measure an ambient temperature around the first storage batteries 21 and the second storage batteries 23.

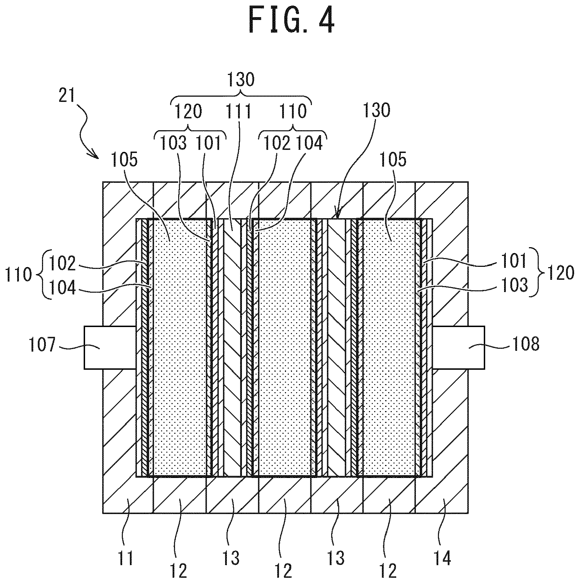

Next, a configuration of the first storage battery 21 that is the bipolar lead-acid battery will be described with reference to FIG. 4. The first storage battery 21 includes: a first plate unit in which a negative electrode 110 is fixed to a first plate (endplate) 11 having a flat plate shape; a second plate unit in which an electrolyte layer 105 is fixed to the inside of a second plate (spacer) 12 having a frame plate shape; a third plate unit having a bipolar electrode 130 fixed to the inside of a third plate (rim) 13 having a frame plate shape, the bipolar electrode 130 including a positive electrode 120 being provided on one surface of a bipolar plate 111 and a negative electrode 110 being provided on the other surface of a bipolar plate 111; and a fourth plate unit in which a positive electrode 120 is fixed to a fourth plate (endplate) 14 having a flat plate shape.

Then, the second plate unit and the third plate unit are alternately stacked between the first plate unit and the fourth plate unit to form the first storage battery 21 having, for example, a substantially rectangular parallelepiped shape. The number of each of the second plate units and the third plate units to be stacked is set such that a storage battery voltage of the first storage battery 21 has a desired numerical value.

A negative electrode terminal 107 is fixed to the first plate 11, and both the negative electrode 110 and the negative electrode terminal 107 fixed to the first plate 11 are electrically connected. A positive electrode terminal 108 is fixed to the fourth plate 14, and both the positive electrode 120 and the positive electrode terminal 108 fixed to the fourth plate 14 are electrically connected.

The first plate 11 to the fourth plate 14 are formed of, for example, a well-known molded resin. Then, the first plate 11 to the fourth plate 14 are fixed to each other by an appropriate method to bring the inside into a sealed state such that the electrolyte solution does not flow out.

The electrolyte layer 105 includes, for example, a glass fiber mat impregnated with an electrolyte solution containing sulfuric acid.

The positive electrode 120 includes: a positive metal foil 101 made of lead or a lead alloy and arranged on one surface of the bipolar plate 111 (hereinafter, the metal foil is referred to as a "positive lead foil 101" on the premise that the metal foil is made of lead or a lead alloy); and a positive active material layer 103 arranged on the positive lead foil 101. This positive lead foil 101 is bonded to the one surface of the bipolar plate 111 by an adhesive agent (not illustrated in FIG. 4) provided between the one surface of the bipolar plate 111 and the positive lead foil 101. Therefore, the adhesive agent, the positive lead foil 101, and the positive active material layer 103 are stacked in this order on the one surface of the bipolar plate 111. Note that the lead foil is pasted by the adhesive agent in the present embodiment, but may be attached by plating.

The negative electrode 110 includes a negative metal foil 102 made of lead or a lead alloy and arranged on the other surface of the bipolar plate 111, and a negative active material layer 104 arranged on the negative lead foil 102. This negative lead foil 102 is bonded to the other surface of the bipolar plate 111 by an adhesive agent provided between the other surface of the bipolar plate 111 and the negative lead foil 102. Then, these positive electrode 120 and negative electrode 110 are electrically connected by an appropriate method such as via a communication hole provided in the bipolar plate 111.

In the first storage battery 21 of the first embodiment having such a configuration, as described above, the bipolar plate 111, the positive lead foil 101, the positive active material layer 103, the negative lead foil 102, and the negative active material layer 104 constitute the bipolar electrode 130. The bipolar electrode refers to an electrode having functions of both the positive electrode and the negative electrode in one electrode. Then, the first storage battery 21 of the embodiment of the present invention has a battery configuration in which a plurality of cell members each formed by interposing the electrolyte layer 105 between the positive electrode 120 and the negative electrode 110 are alternately stacked and assembled to connect the cell members in series. Therefore, a structure is provided in which an electrolyte solution (electrolyte layer) exists not on both surfaces but on one surface of a positive electrode, and an electrolyte solution (electrolyte layer) exists not on both surfaces but on one surface of a negative electrode, which is different from a general lead-acid battery in which an electrolyte solution exists on both surfaces of an electrode plate.

The first storage battery 21 which is the bipolar lead-acid battery described above requires lower cost than the general lead-acid battery and can be downsized since a portion not contributing to an electrochemical reaction is scraped off to the utmost limit so that an energy density can be significantly improved as compared with the general lead-acid battery in which the electrolyte solution exists on both the surfaces of the plate, but has a characteristic of being inferior to a typical lead-acid battery in the high output characteristic because the electrolyte solution (electrolyte layer) exists only on one surface of the electrode. Therefore, there is a characteristic that it is not efficient with respect to charging of power that fluctuates in a short cycle as in the wind power generation 40 or the like.

In addition, the first storage battery 21, which is the bipolar lead-acid battery, may be configured such that a ratio of a sum of a volume of the electrolyte layer 105, a volume of the positive active material layer 103, and a volume of the negative active material layer 104 to a total volume of the first storage battery 21 alone is 50% or more. As a result, the energy density can be sufficiently improved.

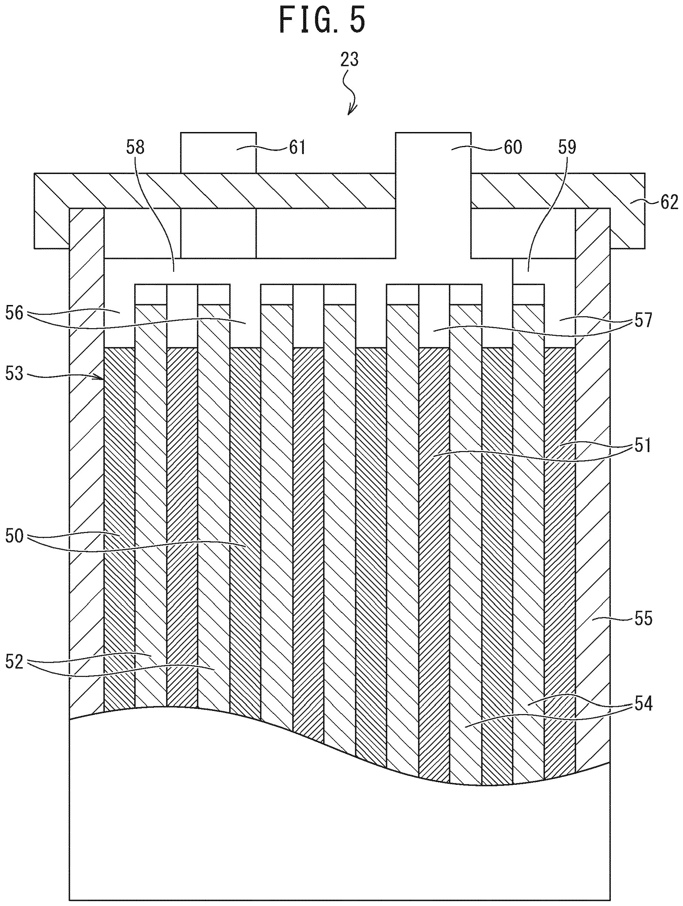

Next, a configuration of the second storage battery 23, which is the general lead-acid battery in which the electrolyte solution exists on both the surfaces of the electrode plate, will be described with reference to FIG. 5. The second storage battery 23 includes a plate group 53 in which a plurality of positive electrode plates 50 and a plurality of negative electrode plates 51 are alternately stacked with a separator 52 interposed therebetween. The plate group 53 is accommodated in a battery case 55 together with an electrolyte solution 54 and immersed in the electrolyte solution 54 in the battery case 55 such that its stacking direction extends along the horizontal direction (that is, plate surfaces of the positive electrode plate 50 and the negative electrode plate 51 are formed along the vertical direction). Therefore, the electrolyte solution 54 exists on both surfaces of the positive electrode plate 50 and the negative electrode plate 51 with the separator 52 interposed therebetween.

The positive electrode plate 50 is formed by, for example, filling an opening of a plate-like grid made of a lead alloy with a positive active material containing lead dioxide, and forming active material layers made of the positive active material containing lead dioxide on both plate surfaces of the plate-like grid made of the lead alloy. The negative electrode plate 51 is formed by, for example, filling an opening of a plate-like grid made of a lead alloy with a negative active material containing metal lead, and forming active material layers made of the negative active material containing metal lead on both plate surfaces of the plate-like grid made of the lead alloy. The plate-like grid which is a substrate of the positive electrode plate 50 and the negative electrode plate 51 can be manufactured by a casting method, a punching method, or an expanding method. The separator 52 is, for example, a porous membrane body made of a resin, glass, or the like. The positive electrode plate 50, the negative electrode plate 51, and the separator 52 can have, for example, rectangular planar shapes.

A current collection lug 56 which projects upward (upward in FIG. 1) of the positive electrode plate 50 is formed on an upper edge portion of the positive electrode plate 50 (that is, an edge portion located on an upper side out of an edge portion of the positive electrode plate 50), and a current collection lug 57 which projects upward (upward in FIG. 1) of the negative electrode plate 51 is formed on an upper edge portion of the negative electrode plate 51. The current collection lugs 56 of the respective positive electrode plates 10 are connected by a positive electrode strap 58, and the current collection lugs 57 of the respective negative electrode plates 51 are connected by a negative electrode strap 59. Furthermore, the positive electrode strap 58 is connected to one end of a positive electrode terminal 60, the negative electrode strap 59 is connected to one end of a negative electrode terminal 61, and the other end of the positive electrode terminal 60 and the other end of the negative electrode terminal 61 penetrate through a lid 62 that closes an opening of the battery case 55 and are exposed to the outside of a case body of the lead-acid battery including the battery case 55 and the lid 62.

Since the electrolyte solution 54 exists on both surfaces of the positive electrode plate 50 and both surfaces of the negative electrode plate 51, the second storage battery 23 described above has a characteristic of being more excellent in the high output characteristic than the first storage battery 21 which is the bipolar lead-acid battery in which the electrolyte solution (electrolyte layer 105) exists only on one surface of each of the positive electrode 120 and the negative electrode 110. Therefore, a charge efficiency is more excellent than that of the first storage battery 21, which is the bipolar lead-acid battery, with respect to charging of power that fluctuates in a short cycle as in the wind power generation 40. On the other hand, an energy density is inferior to that of the bipolar lead-acid battery, and thus, there is a characteristic of being inferior to the first storage battery 21, which is the bipolar lead-acid battery, in terms of cost and downsizing.

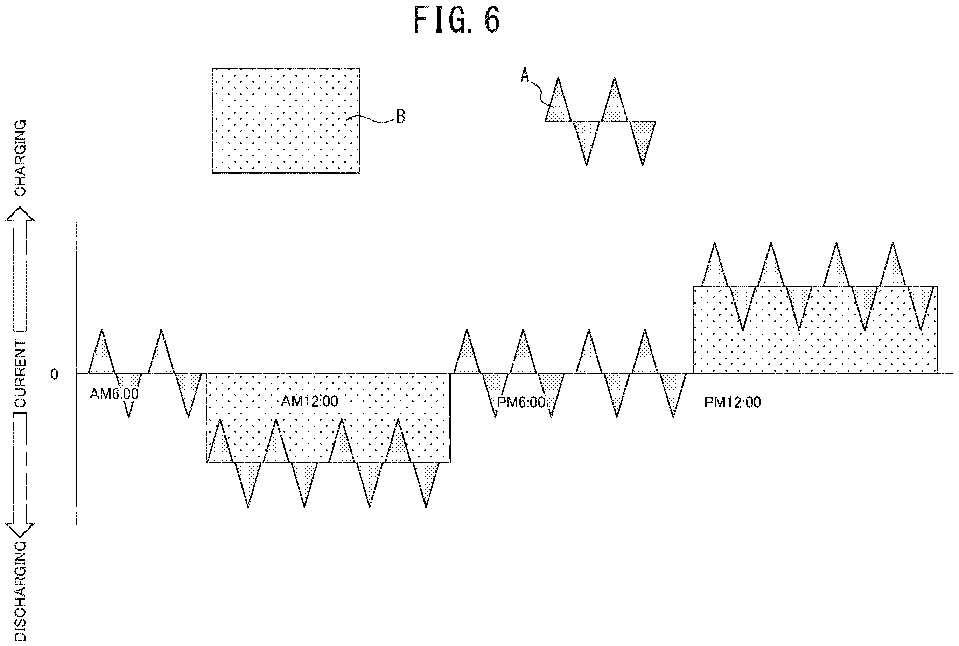

Next, the action and operation of the power storage system 1 will be described with reference to FIG. 6 by taking, as an example, a case where charging and discharging to cope with a long-cycle fluctuation corresponds to cutting peak power in the daytime. In FIG. 6, the vertical axis represents a current value, the middle of the vertical axis represents a current value of 0, the upper side of 0 represents a case where the storage battery unit 6 is charged, and the lower side of 0 represents a case where the storage battery unit 6 is discharged. The horizontal axis represents a time axis. A waveform A illustrated in a triangular shape indicates power that fluctuates in a short cycle, and a waveform B illustrated in a square shape indicates power that fluctuates in a long cycle, which is power having a cycle longer than that of the waveform A illustrated in the triangular shape. Note that the waveform B illustrated in the square shape is indicated by a constant current in FIG. 6, but is not necessarily the constant current.

A feature of the present embodiment is that the first storage battery group 20 constituted by the first storage batteries 21 each having the internal resistance being set higher than that of the second storage battery 23 and the second storage battery group 22 constituted by the second storage batteries 23 each having the internal resistance being set lower than that of the first storage battery 21 are electrically connected in parallel. Therefore, without providing a special control apparatus, the second storage battery group 22 is charged with power from the wind power generation 40 in which the supplied power fluctuates in a short cycle, and the first storage battery group 20 is charged with power from the solar panel power generation 41 in which the supplied power fluctuates in a long cycle. Therefore, it is possible to efficiently perform charging with the power from the power supply in which the cycle of the supplied power fluctuates at low cost.

In addition, in a case where a consumer in general household provided with the power storage system 1 sets the peak cut and peak shift of commercial power, which is power from the grid power supply 31, in the BMU 2, the following operation is performed. In FIG. 6, the rectangle illustrated on the discharging side (the lower side of the current value 0) indicates a discharged state from the grid power supply (commercial power supply) 31 in the daytime and a peak-cut state, and the rectangle illustrated on the charging side (the upper side of the current value 0) indicates a state where the power from the grid power supply (commercial power supply) 31 is charged in the night time zone for the peak shift.

Since the peak cut is performed in the day time zone, there occurs a case where power used by the load 34 is insufficient for a short time with the power from the grid power supply 31. In this case, it is possible to cope with a power request that fluctuates in a short cycle by discharging the second storage battery group 22 since the power storage system 1 includes the second storage battery group 22 constituted by the second storage batteries 23 each having the internal resistance being set to be low.

In addition, power in the case of charging the grid power supply 31 in the night time zone is not a short-cycle fluctuation but a long-cycle fluctuation, and thus, the power can be charged by the first storage battery 21 in which the internal resistance is set to be high. When power fluctuating in a short cycle is generated from the wind power generation 40 in a state where the first storage battery 21 is charged with the power from the grid power supply 31 in the night time zone, the second storage battery 23 in which the internal resistance is set to be low can be charged.

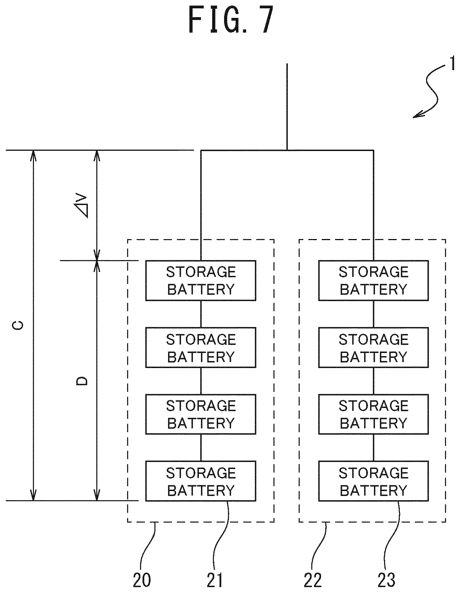

Next, an operating mechanism of the power storage system 1 will be described with reference to FIG. 7. Note that the first storage battery group 20 will be described as the four first storage batteries 21 connected in series in FIG. 7 for the sake of convenience. In FIG. 7, D represents an electromotive force of the first storage battery group 20 and the second storage battery group 22, and is expressed as a stable voltage. ΔV represents a fluctuating voltage, and C represents a dynamic voltage during charging and discharging, which is a voltage obtained by adding the stable voltage D and the fluctuating voltage ΔV. Assuming that the internal resistance of the first storage battery 21 is R₁, the internal resistance of the second storage battery 23 is R₂, a current flowing through the first storage battery 21 is I₁, a current flowing through the second storage battery 23 is I₂, and a voltage of the first storage battery 21 and a voltage of the second storage battery 23 are the same voltage ΔV, I₁ = ΔV/R₁ and I₂ = AV/R₂. In the present embodiment, since the internal resistance R₂ of the second storage battery 23 is set to be lower than the internal resistance R₁ of the first storage battery 21, I₁ < I₂. Therefore, the second storage battery 23 can cause a larger current than that of the first storage battery 21 to flow with respect to a fluctuation of ΔV in a short cycle. Note that ΔV takes a positive value in charging and a negative value in discharging.

Therefore, for example, if the internal resistance of the second storage battery 23 is 2/3 or less of the internal resistance of the first storage battery 21 in a case where the first storage battery 21 and the second storage battery 23 have the same voltage and the same capacity Wh, the second storage battery 23 can cause a current being equal to or more than 1.5 times that of the first storage battery 21 to flow, can charge the power supply whose voltage fluctuates in a short cycle, such as the wind power generation 40, and can perform discharging in response to an instantaneous power request for the load 34.

In addition, the capacity Wh of the first storage battery 21 may be twice or more the capacity Wh of the second storage battery 23. As a result, the energy density can be sufficiently improved.

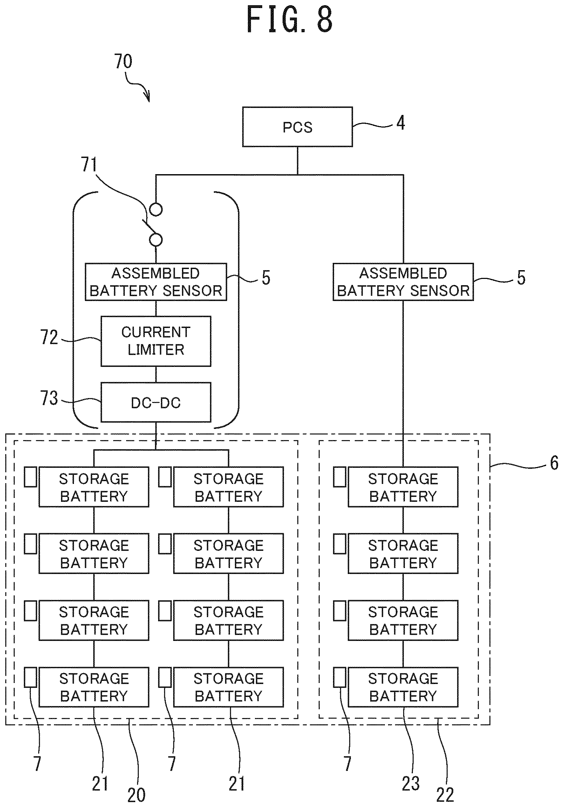

Next, a power storage system 70 according to a second embodiment of the present invention will be described with reference to FIG. 8. FIG. 8 is a block diagram of the power storage system 70 according to the second embodiment. Note that the description of configurations common to those of the power storage system 1 according to the first embodiment is omitted. In addition, the configurations common to those of the power storage system 1 according to the first embodiment are denoted by the same reference signs. The power storage system 70 according to the second embodiment is different from the power storage system 1 according to the first embodiment in that the power storage system 70 includes an assembled battery sensor 5 provided in each of a first storage battery group 20 and a second storage battery group 22 while the power storage system 1 includes the assembled battery sensor 5 provided between the storage battery unit 6 and the PCS 4, and further, any of a switch 71 performing on and off, a current limiter 72, and a DC-DC converter 73 is provided in the first storage battery group 20.

The power storage system 70 includes a storage battery monitoring apparatus (BMU) 2 (not illustrated), a host system (EMS) 3 (not illustrated), an AC-DC converter (PCS) 4, the assembled battery sensor 5, a plurality of temperature sensors 7, the switch 71, and a storage battery unit 6. The assembled battery sensor 5 includes a current sensor 8 and a voltage sensor 9. Note that the current limiter 72 or the DC-DC converter 73 may be provided instead of the switch 71.

The storage battery unit 6 includes a first storage battery group 20 and a second storage battery group 22, and the first storage battery group 20 and the second storage battery group 22 are electrically connected in parallel to the PCS 4. The switch 71 and the assembled battery sensor 5 are connected between the PCS 4 and the first storage battery group 20 in order from the PCS 4 side. In addition, the assembled battery sensor 5 is connected between the PCS 4 and the second storage battery group 22.

In a case where a consumer in general household including the power storage system 70 determines that power supply from a grid power supply 31 is unnecessary due to, for example, long-term absence or the like, the BMU 2 can be set to turn off the switch 71. In this case, the second storage battery group 22 copes with power from a wind power generation 40 that fluctuates in a short cycle. Note that, instead of the switch 71, the current limiter 72 that prevents a current from flowing beyond a certain level or the DC-DC converter 73 that limits a voltage such that the current falls within a certain range may be provided.

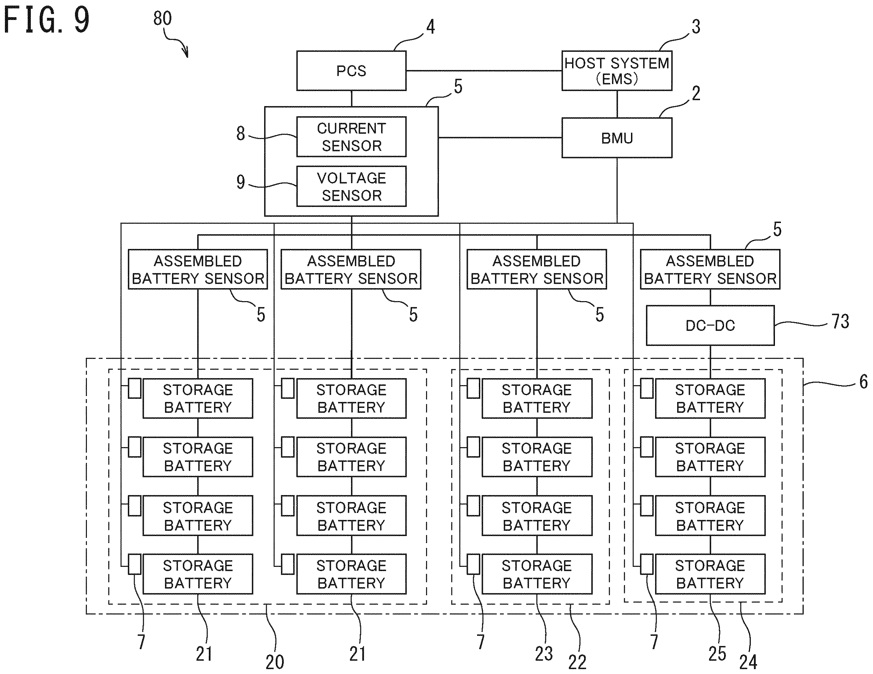

Next, a power storage system 80 according to a third embodiment of the present invention will be described with reference to FIG. 9. FIG. 9 is a block diagram of the power storage system 80 according to the third embodiment. Note that the description of configurations common to those of the power storage system 1 according to the first embodiment is omitted. In addition, the configurations common to those of the power storage system 1 according to the first embodiment are denoted by the same reference signs. The power storage system 80 according to the third exemplary embodiment is different from the power storage system 1 according to the first exemplary embodiment in that the power storage system 80 includes a second storage battery 23 and a third storage battery 25 each having an internal resistance lower than an internal resistance of a first storage battery 21, the first storage battery 21, the second storage battery 23, and the third storage battery 25 are electrically connected in parallel, a DC-DC converter 73 as a boosting means is provided in the third storage battery 25, and a voltage of the third storage battery 25 is controlled to be higher than a voltage of the second storage battery 23. Note that the power storage system 1 in the configuration diagram of the electric power grid system in FIG. 1 is replaced with the power storage system 80 in the third embodiment.

FIG. 9 is a configuration diagram illustrating the power storage system 80 according to the third embodiment of the present invention. As illustrated in FIG. 9, the power storage system 80 includes a storage battery monitoring apparatus (BMU) 2, a host system (EMS) 3, an AC-DC converter (PCS) 4, an assembled battery sensor 5, a storage battery unit 6, and a plurality of temperature sensors 7. The assembled battery sensor 5 includes a current sensor 8 and a voltage sensor 9.

The storage battery unit 6 includes a first storage battery group 20, a second storage battery group 22, and a third storage battery group 24, and the first storage battery group 20, the second storage battery group 22, and the third storage battery group 24 are electrically connected in parallel to the PCS 4. The first storage battery group 20 includes a plurality of first storage batteries 21. In the present embodiment, a pair of four first storage batteries 21 connected in series is connected in parallel in the first storage battery group 20. The second storage battery group 22 includes a plurality of the second storage batteries 23, and the third storage battery group 24 includes a plurality of the third storage batteries 25. In the present embodiment, the second storage battery group 22 includes four second storage batteries 23 connected in series, and the third storage battery group 24 includes four third storage batteries 25 connected in series. When the internal resistance of the first storage battery 21 is R₁, the internal resistance of the second storage battery 23 is R₂, and the internal resistance of the third storage battery 25 is R₃, the internal resistance R₂ of the second storage battery 23 and the internal resistance R₃ of the third storage battery 25 are set to be lower than the internal resistance R₁ of the first storage battery 21 at the same voltage and the same capacity Wh in the present embodiment. Therefore, the second storage battery 23 and the third storage battery 25 have output characteristics higher than that of the first storage battery 21 (have high output characteristics). In the present embodiment, the first storage battery 21 is a bipolar lead-acid battery, and the second storage battery 23 and the third storage battery 25 are the above-described general lead-acid batteries. Note that the pair of four first storage batteries 21 connected in series is connected in parallel in the first storage battery group 20, the four second storage batteries 23 are connected in series in the second storage battery group 22, the four third storage batteries 25 are connected in series in the third storage battery group 24 in the present embodiment. However, the number of the first storage batteries 21 in the first storage battery group 20, the number of the second storage batteries 23 in the second storage battery group 22, and the number of the third storage batteries 25 in the third storage battery group 24 are not limited thereto, and for example, one first storage battery 21, one second storage battery 23, and one third storage battery 25 may be connected in parallel.

The assembled battery sensor 5 is also provided in each of the first storage battery group 20, the second storage battery group 22, and the third storage battery group 24. In addition, the third storage battery group 24 is provided with the DC-DC converter 73 as the boosting means. The DC-DC converter 73 controls the third storage battery 25 in the third storage battery group 24 to have a voltage higher than that of the second storage battery 23 in the second storage battery group 22. Therefore, the second storage battery 23 in the second storage battery group 22 can be controlled to a fully charged state, and the third storage battery 25 in the third storage battery group 24 can be controlled to a fully discharged state.

The storage battery monitoring apparatus (BMU) 2 is a data processing apparatus including a monitoring function of monitoring states of the respective first storage batteries 21, the respective second storage batteries 23, and the respective third storage batteries 25 of the storage battery unit 6 based on measurement information from the current sensor 8, the voltage sensor 9, and the plurality of temperature sensors 7, and a charging and discharging control function of controlling charging and discharging of the storage battery unit 6. In addition, in a case where a consumer such as general household provided with the power storage system 1 desires to suppress the power purchase amount by performing the peak cut and peak shift of commercial power, the peak cut and peak shift can be set in the BMU 2. In such a case, the BMU 2 has a function of requesting the EMS 3 to stop using power from the grid power supply 31 in a predetermined time zone in the daytime (the peak cut) and to store power from the grid power supply 31 in a predetermined time zone at night.

The PCS 4 includes an inverter, and is a power conversion unit that is electrically connected between a power supply side of the grid power supply 31 and the distributed power supply 33 and a load side of the load 34, and a power storage side of the storage battery unit 6, and controls transmission and reception of power. The PCS 4 is controlled by the EMS 3, and performs charging and discharging of the storage battery unit 6. The PCS 4 converts DC power into AC power having a predetermined frequency when discharging power from the storage side of the storage battery unit 6 to the load 34, and converts AC power into DC power when charging the storage battery unit 6 with power from the power supply side of the grid power supply 31 and the distributed power supply 33.

The EMS 3 controls charging and discharging of the storage battery unit 6 by driving the PCS 4 in response to a request from the BMU 2, and further, for example, the EMS 3 instructs the PCS 4 to cause the storage battery unit 6 to perform discharging operation when the power consumption of the load 34 exceeds the power generated on the power supply side of the grid power supply 31 and the distributed power supply 33. In addition, in a case where the power consumption of the load 34 is less than the power generated on the power supply side of the grid power supply 31 and the distributed power supply 33, the EMS 3 instructs the PCS 4 to cause the storage battery unit 6 to perform a charging operation. That is, the EMS 3 superimposes charging and discharging requests from the BMU 2 and charging and discharging for balancing the consumed power and the generated power, and issues a final charging and discharging instruction to the PCS 4.

The assembled battery sensor 5 is a sensor that measures charging and discharging currents and a total voltage of the storage battery unit 6. In addition, the plurality of temperature sensors 7 are installed in the plurality of first storage batteries 21, the plurality of second storage batteries 23, and the plurality of third storage batteries 25, and measure temperatures of the first storage batteries 21, the second storage batteries 23, and the third storage batteries 25, respectively. Here, the temperature sensors 7 are not limited to such an example, and may be installed, for example, in a representative storage battery among the plurality of first storage batteries 21, a representative storage battery among the plurality of second storage batteries 23, and a representative storage battery among the plurality of third storage batteries 25, respectively, or may measure an ambient temperature around the first storage batteries 21, the second storage batteries 23, and the third storage batteries 25.

Since an electrolyte solution 54 exists on both surfaces of a positive electrode plate 50 and both surfaces of a negative electrode plate 51, the above-described second storage battery 23 and third storage battery 25 have a characteristic of being more excellent in a high output characteristic than the first storage battery 21 which is the bipolar lead-acid battery in which an electrolyte solution (electrolyte layer 105) exists only on one surface of each of a positive electrode 120 and a negative electrode 110. Therefore, a charge efficiency is more excellent than that of the first storage battery 21, which is the bipolar lead-acid battery, with respect to charging of power that fluctuates in a short cycle as in the wind power generation 40. On the other hand, an energy density is inferior to that of the bipolar lead-acid battery, and thus, there is a characteristic of being inferior to the first storage battery 21, which is the bipolar lead-acid battery, in terms of cost and downsizing.

Note that the second storage battery 23 and the third storage battery 25 are the general lead-acid batteries in which the electrolyte solution exists on both the surfaces of the plate in the present embodiment, but the present invention is not limited thereto, and any one of the second storage battery 23 and the third storage battery 25 may be the general lead-acid battery in which the electrolyte solution exists on both the surfaces of the plate, and the other may be a lithium ion battery. As a result, it is possible to reduce a required volume of the power storage system while suppressing an increase in cost. Alternatively, the second storage battery 23 and the third storage battery 25 may be lithium ion batteries.

The action and operation of the power storage system 80 when a case where charging and discharging to cope with a long-cycle fluctuation corresponds to cutting peak power in daytime is taken as an example are similar to those in the case of the power storage system 1 illustrated in FIG. 6.

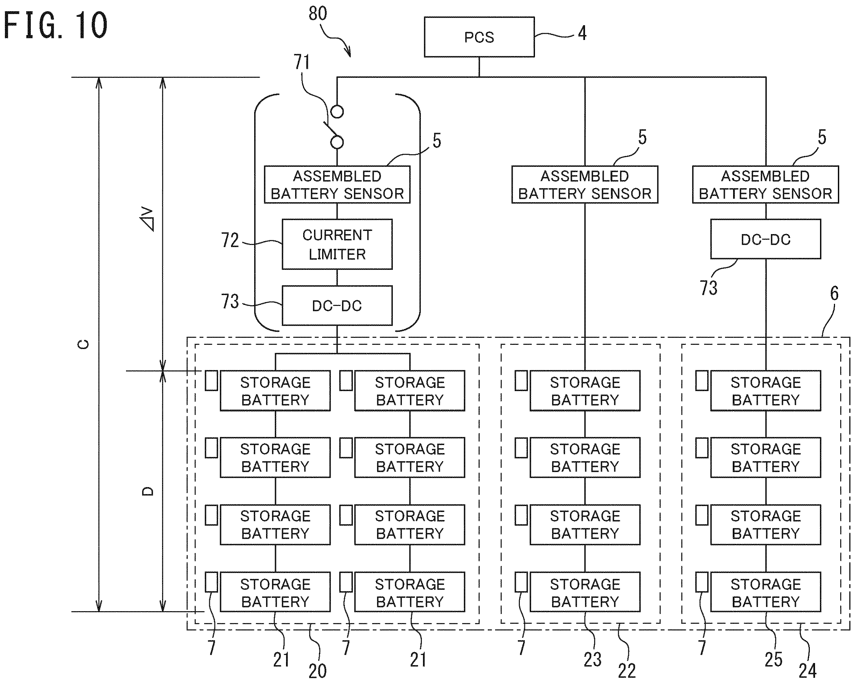

Next, an operating mechanism of the power storage system 80 will be described with reference to FIG. 10. In FIG. 10, D represents an electromotive force of the first storage battery group 20, the second storage battery group 22, and the third storage battery group 24, and is expressed as a stable voltage. ΔV represents a fluctuating voltage, and C represents a dynamic voltage during charging and discharging, which is a voltage obtained by adding the stable voltage D and the fluctuating voltage ΔV. Assuming that the internal resistance of the first storage battery 21 is R₁, the internal resistance of the second storage battery 23 is R₂, the internal resistance of the third storage battery 25 is R₃, a current flowing through the first storage battery 21 is I₁, a current flowing through the second storage battery 23 is I₂, a current flowing through the third storage battery 25 is I₃, and a voltage of the first storage battery 21, the voltage of the second storage battery 23, and the voltage of the third storage battery 25 are the same voltage ΔV, I₁ = ΔV/R₁, I₂ = ΔV/R₂, and I₃ = ΔV/R₃. In the present embodiment, since the internal resistance R₂ of the second storage battery 23 and the internal resistance R₃ of the third storage battery 25 are set to be lower than the internal resistance R₁ of the first storage battery 21, I₁ < I₂ and I₁ < I₃. Therefore, the second storage battery 23 and the third storage battery 25 can cause a larger current than that of the first storage battery 21 to flow with respect to a fluctuation of ΔV in a short cycle. Note that ΔV takes a positive value in charging and a negative value in discharging.

Therefore, for example, if the internal resistances of the second storage battery 23 and the third storage battery 25 are 2/3 or less of the internal resistance of the first storage battery 21 in a case where the first storage battery 21, the second storage battery 23, and the third storage battery 25 have the same voltage and the same capacity Wh, the second storage battery 23 and the third storage battery 25 can cause currents being equal to or more than 1.5 times that of the first storage battery 21 to flow, can charge a power supply whose voltage fluctuates in a short cycle, such as the wind power generation 40, and can perform discharging in response to an instantaneous power request for a load 34.

In addition, the capacity Wh of the first storage battery 21 may be twice or more the capacity Wh of the second storage battery 23 and the capacity Wh of the third storage battery 25. As a result, the energy density can be sufficiently improved.

In addition, the first storage battery group 20 may be provided with any of a switch 71 performing on and off, a current limiter 72, and the DC-DC converter 73 as illustrated in FIG. 10. As a result, in a case where a consumer in general household determines that power supply from a grid power supply 31 is unnecessary due to, for example, long-term absence or the like, the BMU 2 can be set to turn off the switch 71. In this case, the second storage battery group 22 copes with power from a wind power generation 40 that fluctuates in a short cycle. Note that, instead of the switch 71, the current limiter 72 that prevents a current from flowing beyond a certain level or the DC-DC converter 73 that limits a voltage such that the current falls within a certain range may be provided.

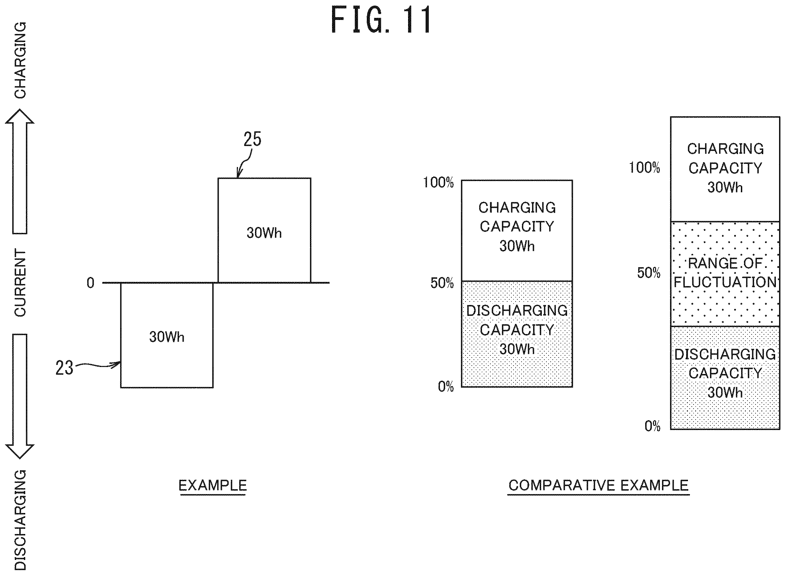

Next, operating mechanisms of the second storage battery 23 and the third storage battery 25 will be described with reference to FIG. 11. A view on the left side of FIG. 11 is a view for describing the operating mechanisms of the second storage battery 23 and the third storage battery 25 which correspond to Example of the present embodiment, and views in the middle and on the right side of FIG. 11 are views for describing an operating mechanism in Comparative Example. A feature of the present embodiment is that the third storage battery group 24 is provided with the DC-DC converter 73 as the boosting means, and the third storage battery 25 in the third storage battery group 24 is controlled by the DC-DC converter 73 to have the voltage higher than that of the second storage battery 23 in the second storage battery group 22. Therefore, the second storage battery 23 in the second storage battery group 22 can be controlled to a fully charged state, and the third storage battery 25 in the third storage battery group 24 can be controlled to a fully discharged state. In addition, the second storage battery 23 in the second storage battery group 22 may be constantly controlled to the fully charged state, and the third storage battery 25 in the third storage battery group 24 may be constantly controlled to the fully discharged state.

Example in FIG. 11 is a case where there is a request for a capacity of 30 Wh in both charging and discharging and is a case in a case where the capacity of the second storage battery 23 is 30 Wh, and the capacity of the third storage battery 25 is 30 Wh. As illustrated in Example, the second storage battery 23 is in the fully charged state, and thus, can discharge all of 30 Wh. In addition, the third storage battery 25 is in the fully discharged state, and thus, be charged with all of 30 Wh. Therefore, the capacity of the second storage battery 23 is sufficient with 30 Wh, and the capacity of the third storage battery 25 is sufficient with 30 Wh, so that a total capacity of the second storage battery 23 and the third storage battery 25 is 60 Wh.

On the other hand, if an SOC (partial charge) can be controlled to be 50% in a case where a capacity of a storage battery illustrated as Comparative Example is 60 Wh, 30 Wh is a discharged state and 30 Wh is a charged state as illustrated in the left view in Comparative Example, which is equivalent to the second storage battery 23 and the third storage battery 25 in Example. However, the SOC actually fluctuates as illustrated in the right view in Comparative Example. For example, when the SOC fluctuates to be 60%, a discharged state is 24 Wh, and thus, charging of all of 30 Wh is not possible. In addition, when the SOC fluctuates to be 40%, a charged state is 24 Wh, and thus, discharging of 30 Wh is not possible. Therefore, even when the capacity of 30 Wh is required in both charging and discharging, a storage battery capacity of 60 Wh + fluctuation range is required, and the battery capacity increases as compared with the second storage battery 23 and the third storage battery 25 in Example. In the present embodiment, however, the DC-DC converter 73 can control the second storage battery 23 to the fully charged state and can control the third storage battery 25 to the fully discharged state, and thus, there is an effect that a size can be reduced since the battery capacity can be reduced.

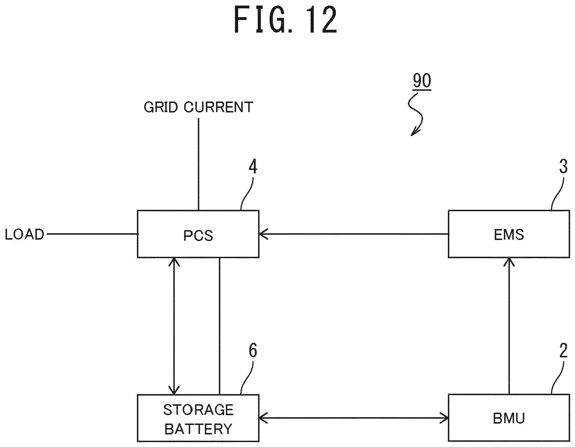

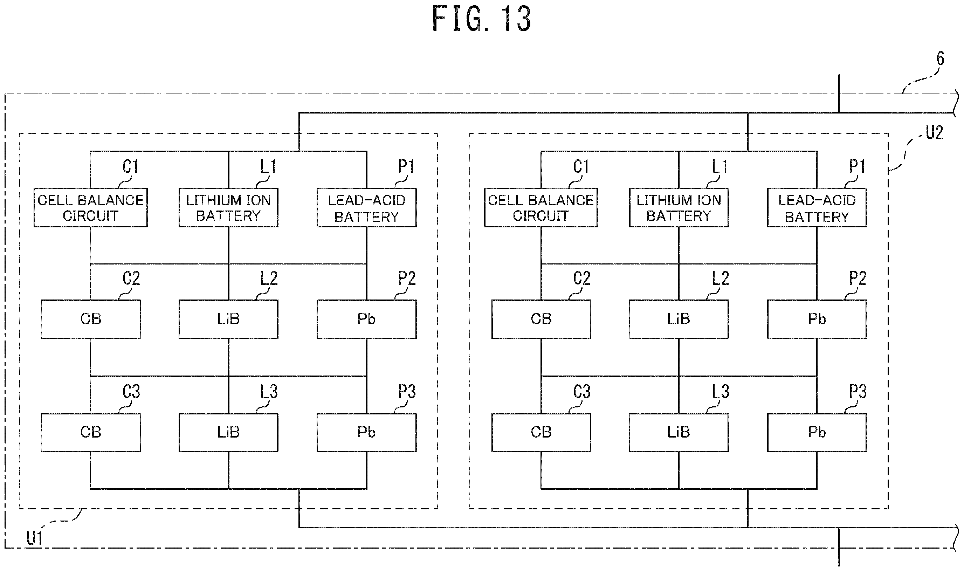

Next, a power storage system 90 according to a fourth embodiment of the present invention will be described with reference to FIGS. 12 and 13. FIG. 12 is a block diagram illustrating an overall configuration of the power storage system 90 according to the embodiment of the present invention. Configurations common to those of the power storage system 1 according to the first embodiment are denoted by the same reference signs.

The power storage system 90 is, for example, a system that stores a grid current, generated by various power plants such as a thermal power plant, or renewable energy such as wind power generation and transmitted, in a storage battery unit 6 and transmits power stored in the storage battery unit 6 to a load such as a home, an office, or a factory as necessary. The power storage system 90 according to the embodiment of the present invention includes a BMU 2, an EMS 3, and a PCS 4 in addition to the storage battery unit 6.

The BMU 2 is a battery management unit, and is an apparatus that manages a voltage of each of batteries constituting the storage battery unit 6, a temperature of the entire storage battery unit 6, and the like. Therefore, the BMU 2 can grasp a state of the storage battery unit 6 via sensors that acquires various types of information provided in the storage battery unit 6. Note that a function of the BMU 2 is not limited to such a function, and other functions may be provided.

As the BMU 2, for example, a personal computer (PC) or a microcomputer is used. In addition, the BMU 2 may be installed near the storage battery unit 6, or may be configured to be managed on a cloud or managed remotely.

The EMS 3 is a so-called energy management system, and is a system that grasps, manages, and optimizes a use state of power energy. In addition, the PCS 4 is a power conditioning system, and serves a role of converting a direct current generated by the grid current or the like into an alternating current and adjusting the alternating current to a stable output suitable for output to the load or storage in a storage battery B.

The storage battery unit 6 is a battery that stores electricity from the grid current or the like via the PCS 4. In many cases, the storage battery unit 6 is stationary to store power. In the embodiment of the present invention, the storage battery unit 6 is configured by a combination of an organic storage battery and an aqueous solution storage battery. Hereinafter, a case where a lithium ion battery is employed as the organic storage battery and a lead-acid battery is employed as the aqueous solution storage battery will be described as an example.

The storage battery unit 6 is provided with various sensors (these various sensors are not indicated in FIG. 12 and FIG. 13 to be described later). The various sensors are sensors that acquire information (hereinafter, the information is appropriately referred to as "operation history information") indicating an operation history or a state of the storage battery unit 6 such as a current, a voltage, or a temperature. These sensors may be provided for each unit or may be provided for each individual storage battery unit 6.

Here, the operation history information is, for example, information of a current value or a voltage value during charging or discharging of the storage battery unit 6, or a temperature of the storage battery unit 6. In addition, the operation history information includes not only measurement values measured by such various sensors or sampling values but also various types of information indicating the state of the storage battery unit 6 calculated and processed in the BMU 2 using the measurement values measured by the sensors such as a state of charge. The operation history information may be information for each of a plurality of provided units, or information on the entire storage battery unit 6.

In addition, these various sensors may be provided as a part of elements constituting the BMU 2. On the other hand, the BMU 2 may serve only a role of acquiring the operation history information from the various sensors without including the various sensors as constituent elements thereof as not illustrated in FIG. 12.

Furthermore, the storage battery unit 6 may be provided with a transmission/reception apparatus configured to transmit the operation history information acquired by the various sensors to the BMU 2 and receive a command, for example, from the PCS 4 and the like.

In the embodiment of the present invention, the direct current from the grid current from the power plant of thermal power or the like or renewable energy is converted into the alternating current in the PCS 4, and then, the output to the load or the storage in the storage battery unit 6 is performed.

The BMU 2 grasps the state of charge, a deterioration degree, or the like of the storage battery unit 6, and issues an operation command to the EMS 3 according to the state of the storage battery unit 6. This operation command is further transmitted to the PCS 4 to appropriately issue a command for charging or discharging with respect to the storage battery unit 6 and perform the above-described output to the load and the like. That is, the BMU2 as the battery management unit controls the charging and discharging of the storage battery unit 6.

Note that the BMU 2, the EMS 3, the PCS 4, and the storage battery unit 6 are given as four constituent elements of the storage battery system 90 in the embodiment of the present invention as illustrated in FIG. 12, but the constituent elements of the storage battery system 90 are not limited thereto. In addition, it is also possible to impart the functions of the EMS 3 and the PCS 4 to the BMU 2, and in this case, the storage battery system 90 is constituted by the BMU 2 and the storage battery unit 6.

In addition, the respective constituent elements are connected by an arrow or a solid line in FIG. 12. Here, an arrow indicates a flow of information, and the information is transmitted in a direction of the arrow. On the other hand, a solid line indicates a flow of a current. Therefore, power transmitted from the grid current temporarily flows into the PCS 4 to be subjected to the above-described processing, and stored in the storage battery unit 6. Then, the power stored in the storage battery unit 6 is discharged and transmitted to the load.

Furthermore, since the BMU 2 and the like are not necessarily installed near the storage battery B and may be controllable on the cloud or remotely as described above, transmission and reception of information in the storage battery system 90 may be performed in a wired or wireless manner.

Next, the storage battery unit 6 according to the embodiment of the present invention will be described hereinafter. FIG. 13 is a block diagram illustrating an internal configuration of the storage battery unit 6 according to the embodiment of the present invention. The storage battery unit 6 is configured by connecting the same number of lithium ion batteries L and the same number of lead-acid batteries P, and these constituted one unit together. Then, a plurality of the units constitute the storage battery unit 6 together.

Note that the storage battery unit 6 is indicated by a broken line, and the unit is surrounded by a broken line in FIG. 13. In addition, solid lines connecting the lithium ion batteries L, the lead-acid batteries P, and cell balance circuits C indicate power charged or discharged into or from the storage battery unit 6.

In the storage battery unit 6 of FIG. 13, two units U1 and U2 are illustrated as an example. Both the units U1 and U2 have the same configuration, and the lithium ion batteries L and the lead-acid batteries P are each connected in series with the same type of storage batteries, and the lithium ion battery L and the lead-acid battery P are connected in parallel with each other.

A state where three lithium ion batteries L and three lead-acid batteries P (lithium ion batteries L1 to L3 and lead-acid batteries P1 to P3) are connected is illustrated in the storage battery unit 6 illustrated in FIG. 13. Note that the lithium ion batteries L2 and L3 and the lead-acid batteries BP2 and P3 are represented as "LiB" and "Pb", respectively, in FIG. 13 for convenience.

The number of the lithium ion batteries L and the number of the lead-acid batteries P constituting each unit can be arbitrarily set according to required performance of the storage battery unit 6. In addition, how many units are to be provided in the storage battery unit 6 can also be arbitrarily set. However, an organic electrolyte solution is used for the lithium ion battery L as described above, it is a matter of course to that it is necessary to comply with the provisions of the Fire Service Act, for example.

The lithium ion battery L can be divided into a plurality of types depending on what is used as a material of the battery, but any type of battery may be used as long as it is the lithium ion battery L.

A battery having any structure can be adopted as a lead-acid battery, and among these, a bipolar lead-acid battery is particularly suitably used. In the bipolar lead-acid battery, a positive electrode and a negative electrode are provided on both surfaces of a bipolar plate. Thus, as compared with a general lead-acid battery, a material is reduced, a capacity per volume and a capacity per weight are improved, and a degree of freedom in designing the battery is improved. Therefore, it is possible to significantly reduce cost and weight, and it is possible to further improve a battery capacity and rate characteristics.

In addition, as a structural feature of the bipolar lead-acid battery, both active material layers of the positive electrode and the negative electrode are held in a state of being pressed from both sides by a current collector and a separator, and thus, the active material layers are less likely to fall off as compared with a general lead-acid battery, and battery performance can be maintained and service life can be extended.

As illustrated in FIG. 13, the storage battery unit 6 according to the embodiment of the present invention is further provided with the cell balance circuits C. Here, the cell balance circuits C are connected at a ratio of one to one lithium ion battery L and one lead-acid battery P. The cell balance circuit C is a circuit configured to balance a charge capacity between the lithium ion battery L and the lead-acid battery P when charging is performed with respect to the storage battery unit 6.

In addition, between the lithium ion battery L and the lead-acid battery P of the embodiment of the present invention, a value of an overcharge voltage of the lithium ion battery L is set to be higher than a value of an end-of-charge voltage of the lead-acid battery P during charging. Specifically, the overcharge voltage set for the lithium ion battery L is, for example, 3.7 V or more. On the other hand, the end-of-charge voltage of the lead-acid battery P is, for example, 2 V or more.

That is, since the rate characteristics of the lithium ion battery L are higher than those of the lead-acid battery P as described above, when power to be charged flows through the PCS 3, the power is first stored in the lithium ion battery L. However, if the lead-acid battery P is simply set to be charged after the lithium ion battery L is fully charged, deterioration of the lithium ion battery L is likely to be promoted.

Therefore, in the embodiment of the present invention, charge amounts of the lithium ion battery L and the lead-acid battery P are leveled by the cell balance circuit C to prevent a difference between values of power to be charged into cells of the lithium ion battery L and the lead-acid battery P, for example, voltage values, from being a certain value or more.

Then, since the value of the overcharge voltage is set for the lithium ion battery L, the lithium ion battery L is not charged beyond the value. When the lithium ion battery L is fully charged by charging, the lead-acid battery P is successively charged since the value of the overcharge voltage of the lithium ion battery L is set to be higher than the value of the end-of-charge voltage of the lead-acid battery P. That is, the lead-acid battery P serves as a buffer of the lithium ion battery L.

Since the storage battery system 90 includes the storage battery unit 6 configured by the combination of the lithium ion battery L and the lead-acid battery P as described above, the storage battery unit 6 utilizing the respective characteristics of the lithium ion battery L and the lead-acid battery P can be configured. Therefore, when a plurality of types of storage batteries that can complement each other while exhibiting the respective characteristics are combined in view of the characteristics of the storage battery, it is possible to operate the storage batteries more efficiently and stably.

Furthermore, the lead-acid battery P is charged since the value of the overcharge voltage of the lithium ion battery L is set to be higher than the value of the end-of-charge voltage of the lead-acid battery P. That is, since the lead-acid battery P serves as a so-called buffer in a relationship between the lithium ion battery L and the lead-acid battery P, the lithium ion battery L is not excessively charged even if charging is performed. Therefore, the lithium ion battery L is protected. This makes it possible to extend the service life of the storage battery unit 6 and to operate the storage battery unit 6 for a long period of time.

Note that the configuration in which the cell balance circuit C is provided in the storage battery system 90 has been described in the embodiment of the present invention described above. However, the cell balance circuit C is not an essential constituent element of the storage battery unit 6, and is not necessarily connected. For example, in charging of the lithium ion battery L and the lead-acid battery P, any configuration can be adopted as long as it is possible to adopt a configuration in which the both are charged with leveling to a certain extent, for example, by managing a charging process while monitoring voltmeters provided in the both by the BMU 2.

Although the description is given with reference to a limited number of embodiments as above, the scope of right is not limited to those, and modifications of the embodiments based on the above disclosure are self-evident to those skilled in the art.

### Reference Signs List

- 1: Power storage system
- 2: BMU
- 3: EMS
- 4: PCS
- 5: Assembled battery sensor
- 6: Storage battery unit
- 7: Temperature sensor
- 8: Current sensor
- 9: Voltage sensor
- 11: First plate
- 12: Second plate
- 13: Third plate
- 14: Fourth plate
- 20: First storage battery group
- 21: First storage battery
- 22: Second storage battery group
- 23: Second storage battery
- 24: Third storage battery group
- 25: Third storage battery
- 30: Electric power grid system
- 31: Grid power supply
- 32: Substation equipment
- 33: Distributed power supply
- 34: Load
- 40: Wind power generation
- 41: Solar panel power generation
- 50: Positive electrode plate
- 51: Negative electrode plate
- 52: Separator
- 54: Electrolyte solution
- 55: Battery case
- 56: Current collection lug
- 57: Current collection lug
- 58: Positive electrode strap
- 59: Negative electrode strap
- 60: Positive electrode terminal
- 61: Negative electrode terminal
- 70: Power storage system
- 71: Switch
- 72: Current limiter
- 73: DC-DC converter
- 80: Power storage system
- 90: Power storage system
- 103: Positive active material layer
- 104: Negative active material layer
- 105: Electrolyte layer
- 107: Negative electrode terminal
- 108: Positive electrode terminal
- 110: Negative electrode
- 111: Bipolar plate
- 120: Positive electrode
- C: Cell balance circuit
- L: Lithium ion battery
- P: Lead-acid battery system

## Claims

1. A power storage system connected to a power supply in which a cycle of supplied power fluctuates, the power storage system comprising:
a first storage battery; and
a second storage battery having an internal resistance lower than an internal resistance of the first storage battery at a same voltage and a same capacity Wh,
wherein the first storage battery and the second storage battery are electrically connected in parallel.

2. The power storage system according to claim 1, wherein a capacity Wh of the first storage battery is twice or more a capacity Wh of the second storage battery.

3. The power storage system according to claim 1, wherein the internal resistance of the second storage battery is 2/3 or less of the internal resistance of the first storage battery at a same voltage and a same capacity Wh.

4. The power storage system according to any one of claims 1 to 3, wherein
the first storage battery is a bipolar lead-acid battery including:
a bipolar electrode that includes a bipolar plate having one surface provided with a positive electrode including a positive active material layer and another surface provided with a negative electrode including a negative active material layer;
an electrolyte layer in contact with the positive electrode on the one surface of the bipolar plate; and
an electrolyte layer in contact with the negative electrode on the another surface of the bipolar plate, and
the second storage battery is a lead-acid battery including a positive electrode plate, a negative electrode plate, and an electrolyte solution, both surfaces of each of the positive electrode plate and the negative electrode plate being in contact with the electrolyte solution.

5. The power storage system according to claim 4, wherein a ratio of a sum of a volume of the electrolyte layer, a volume of the positive active material layer, and a volume of the negative active material layer to a total volume of the first storage battery alone is 50% or more.

6. The power storage system according to any one of claims 1 to 3, wherein
the power supply includes a first power generation apparatus and a second power generation apparatus, and
a cycle of supplied power from the first power generation apparatus is shorter than a cycle of supplied power from the second power generation apparatus.

7. The power storage system according to claim 1, further comprising
a third storage battery having an internal resistance lower than the internal resistance of the first storage battery at a same voltage and a same capacity Wh,
wherein the first storage battery, the second storage battery, and the third storage battery are electrically connected in parallel, and
the third storage battery is provided with a boosting means, and a voltage of the third storage battery is controlled to be higher than a voltage of the second storage battery.

8. The power storage system according to claim 7, wherein the second storage battery is controlled to a fully charged state, and the third storage battery is controlled to a fully discharged state.

9. The power storage system according to claim 8, wherein the second storage battery is constantly controlled to the fully charged state, and the third storage battery is constantly controlled to the fully discharged state.

10. The power storage system according to claim 7, wherein, when a capacity Wh of the first storage battery, a capacity Wh of the second storage battery, and a capacity Wh of the third storage battery are defined, the capacity Wh of the first storage battery is three times or more a sum of the capacity Wh of the second storage battery and the capacity Wh of the third storage battery.

11. The power storage system according to any one of claims 7 to 10, wherein one of the second storage battery and the third storage battery is an aqueous solution storage battery using an aqueous electrolyte solution.

12. The power storage system according to claim 11, wherein the aqueous solution storage battery is a lead-acid battery.

13. The power storage system according to claim 12, wherein the lead-acid battery includes a positive electrode plate, a negative electrode plate, and an electrolyte solution, and both surfaces of each of the positive electrode plate and the negative electrode plate are in contact with the electrolyte solution.

14. The power storage system according to claim 11, wherein another of the second storage battery and the third storage battery is an organic storage battery using an organic electrolyte solution.

15. The power storage system according to claim 14, wherein each of the organic storage batteries is a lithium ion battery.

16. The storage battery system according to claim 14, wherein a value of an overcharge voltage of the organic storage battery is set to be higher than a value of an end-of-charge voltage of the aqueous solution storage battery.

17. The power storage system according to any one of claims 7 to 10, wherein the second storage battery and the third storage battery are organic storage batteries each using an organic electrolyte solution.

18. The power storage system according to claim 17, wherein each of the organic storage batteries is a lithium ion battery.

19. The storage battery system according to claim 17, wherein a value of an overcharge voltage of the organic storage battery is set to be higher than a value of an end-of-charge voltage of the aqueous solution storage battery.
